# EUROPEAN PATENT APPLICATION

(11) **EP 2 252 097 A1**
(43) Date of publication of application: **17.11.2010**
(21) Application number: 09713442.3
(22) Date of filing: 20.02.2009
(51) Int. Cl.: H04W 12/08, H04L 9/32, H04M 1/665, H04W 4/22, H04W 68/00

(54) **METHOD FOR TRANSMITTING NOTIFICATION SIGNAL AND MOBILE STATION**

(30) Priority: 21.02.2008 JP 2008040735
(71) Applicant: NTT DOCOMO, INC., Chiyoda-ku Tokyo 100-6150 (JP)
(72) Inventor: HAPSARI, Wuri Andarmawant, Chiyoda-ku, Tokyo 100-6150 (JP); ISHI, Minami, Chiyoda-ku, Tokyo 100-6150 (JP); KOSHIMIZU, Takashi, Chiyoda-ku, Tokyo 100-6150 (JP); TANABE, Akimichi, Chiyoda-ku, Tokyo 100-6150 (JP); TANAKA, Itsuma, Chiyoda-ku, Tokyo 100-6150 (JP); ZUGENMAIER, Alf, Chiyoda-ku, Tokyo 100-6150 (JP)
(74) Representative: HOFFMANN EITLE
(86) International application number: PCT/JP2009/053075
(87) International publication number: WO 2009/104757

(57) **Abstract**

A method for transmitting a notification signal comprises a step in which each of a plurality of mobile stations (UE) compares first security information which each of the mobile stations manages with second security information included in a received first notification signal to thereby verify the validity of the first notification signal and a step in which each of the mobile stations (UE) performs the output corresponding to the first notification signal in the case of successfully verifying the validity of the first notification signal.

## Description

### TECHNICAL FIELD

The present invention relates to a notification signal transmission method by which a network note transmits a notification signal to multiple mobile stations and also relates to a mobile station for the same.

### BACKGROUND ART

An "ETWS (Earthquake and Tsunami Warning System)" configured to distribute emergency information such as earthquake information or tsunami information has been studied in 3GPP as a subset of a "PMS (Public Warning System)-"

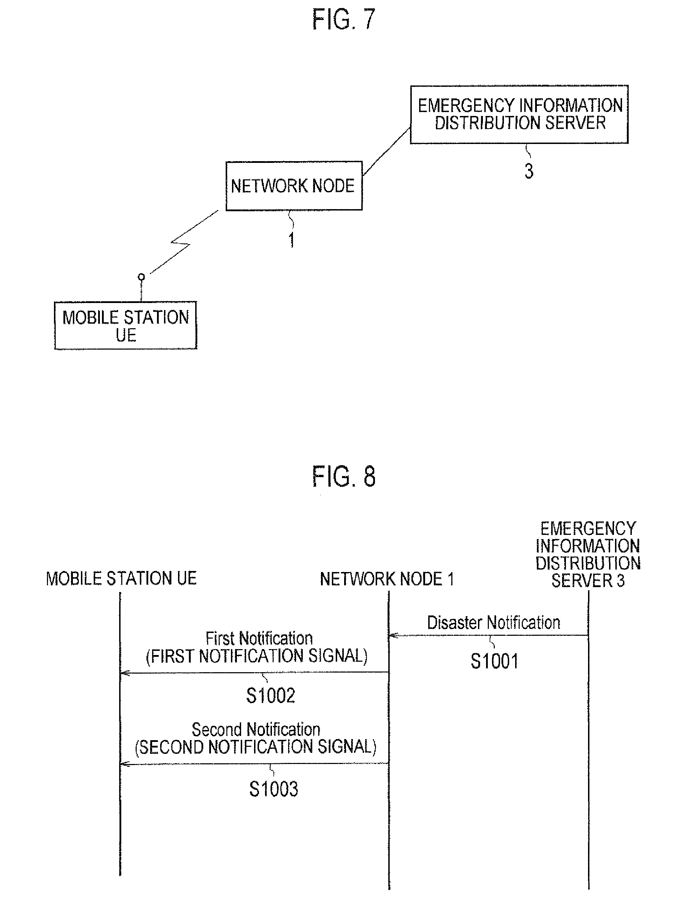

As shown in Fig. 7, the ETWS includes a network node (including, for example, a radio base station eNB or the like) 1, an emergency information distribution server 3 and a mobile station UE.

In the ETWS as shown in Fig. 8, the emergency information distribution server 3 transmits a "Disaster Notification (emergency information)" indicating that a disaster has occurred, to the network node 1 in Step S1001.

In Step S1002, the network node 1 notifies multiple mobile stations UE that the disaster has occurred, by using a "First Notification (first notification signal)."

When receiving the "first Notification," the mobile stations UE each perform output (such as buzzer output, alarm output or displaying on a display) for the "First Notification. "

In Step S1003, the network node 1 notifies the multiple mobile stations UE of detailed information on the disaster by using a "Second Notification (second notification signal)."

Note that each mobile station UE receives the "Second Notification" based on information designated by the aforementioned "First Notifications, and displays the detailed information on the display, the detailed information being notified by using the "Second Notification."

Since the aforementioned ETWS has a possible threat such as transmission of a "Fake First Notification (fake first notification signal)" by an invalid radio base station, the aforementioned First Notification needs to be transmitted to the mobile station by secure communication.

In the configuration of ETWS shown in Fig. 7, it is assumable that the "Disaster Notification" is transmitted by secure communication using a dedicated line or IPsec, through an interface between the network node 1 and the emergency information distribution server, whereas there is a problem that the "First Notification (first notification signal)" cannot be transmitted by security communication, through a radio interface between the network node 1 and the mobile station UE.

Specifically, a radio link for security communication is not established between the network node 1 and the mobile station UE at the time of transmitting the "First Notification (first notification signal). " For this reason, the "First Notification (first notification signal)" cannot be transmitted by security communication, through the radio interface between the radio base station eNB and the mobile station UE.

In addition, even if the link for security communication is established between the mobile station UE and the network node 1 such as the radio base station eNB, an exchange MME or gateway device S-GW, security cannot be provided using security information individually established for each mobile station UE by the network because the multiple mobile stations UE receiving the same "First Notification" each need to determine whether or not the received "First Notification" is directed thereto.

### DISCLOSURE OF THE INVENTION

The present invention has been made in view of the above problem. An object of the present invention is to provide a notification signal transmission method capable of transmitting a notification signal to multiple mobile stations by secure communication and to provide a mobile station for the same.

A first aspect of the present invention is summarized as a notification signal transmission method by which a network node transmits a notification signal to a plurality of mobile stations, the method comprise verifying a received first notification signal at each of the plurality of mobile stations by comparing first security information managed by the each of the plurality of the mobile stations with second security information included in the first notification signal and outputting for the first notification signal from each of the plurality of mobile stations when the verification of the first notification signal succeeds at the each of the plurality of the mobile stations.

In the first aspect, wherein the first notification signal includes a radio access technology identifier which identifies a radio access technology and each of the plurality of mobile stations receives a second notification signal corresponding to the first notification signal by using a radio access technology identified by the radio access technology identifier included in the first notification signal.

In the first aspect, wherein each of the plurality of mobile stations determines whether or not to perform the verification, depending on a verification necessity identifier indicating a necessity of the verification.

In the first aspect, wherein each of the plurality of mobile stations determines whether or not to perform the verification, depending on whether or not the first security information is managed.

In the first aspect, wherein the network node transmits a plurality of first notification signals through a single paging channel and among the plurality of first notification signals, each mobile station performs output for a first notification signal for which the verification succeeds.

In the first aspect, wherein the second security information included in the first notification signal is updated at predetermined timing by the network node.

In the first aspect, wherein the first security information managed by each of the mobile stations is updated at predetermined timing or in response to a notification of the network node.

In the first aspect, wherein when the first notification signal includes a communication identifier which indicates a presence of a specific communication to be transmitted to each of the mobile stations, the second security information is included in the communication identifier.

In the first aspect, wherein the second security information is included in a region in the first notification signal, the region indicating a reason why the first notification signal is transmitted.

A second aspect of the present invention is summarized as a mobile station used in a mobile communication system in which a network node transits a notification signal to a plurality of mobile stations, the mobile station comprise a verifier unit configured to perform verification of a received first notification signal by comparing first security information managed by the mobile station with second security information included in the first notification signal; and
an output unit configured to perform output for the first notification signal when the verification of the first notification signal succeeds.

In the second aspect, wherein the first notification signal includes a radio access technology identifier which identifies a radio access technology, the mobile station comprising a receiver configured to receive a second notification signal corresponding to the first notification signal by using a radio access technology identified by the radio access technology identifier included in the first notification signal.

In the second aspect, wherein the verifier unit determines whether or not to perform the verification, depending on a verification necessity identifier indicating a necessity of the verification.

In the second aspect, wherein the verifier unit determines whether or not to perform the verification, depending on whether or not the first security information is managed.

In the second aspect, wherein when the network node transmits a plurality of first notification signals through a paging channel, the output unit performs output for a first notification signal for which the verification succeeds, among the plurality of first notification signals.

In the second aspect, wherein the first security information is updated at predetermined timing or in response to a notification from the network node.

### BRIEF DESCRIPTION OF THE DRAWINGS

[Fig. 1] Fig. 1 is a functional block diagram of a mobile station according to a first embodiment of the present invention.
[Fig. 2] Fig. 2 is a diagram for explaining a "First Notification (first notification signal) " which is transmitted by a network node according to the first embodiment of the present invention.
[Fig. 3] Fig. 3 is a diagram for explaining a verification performed by the mobile station according to the first embodiment of the present invention.
[Fig. 4] Fig. 4 is a diagram for explaining a verification performed by the mobile station according to the first embodiment of the present invention.
[Fig. 5] Fig. 5 is a flowchart for explaining an operation of the mobile station according to the first embodiment of the present invention.
[Fig. 6] Fig. 6 is a flowchart for explaining an operation of the mobile station according to the first embodiment of the present invention.
[Fig. 7] Fig. 7 is an overall configuration diagram of an EWTS.
[Fig. 8] Fig. 8 is a sequence diagram for explaining an operation of transmitting emergency information in the EWTS.

### BEST MODE FOR CARRYING OUT THE INVENTION

### (Configuration of Mobile Communication System According to First Embodiment of the Present Invention)

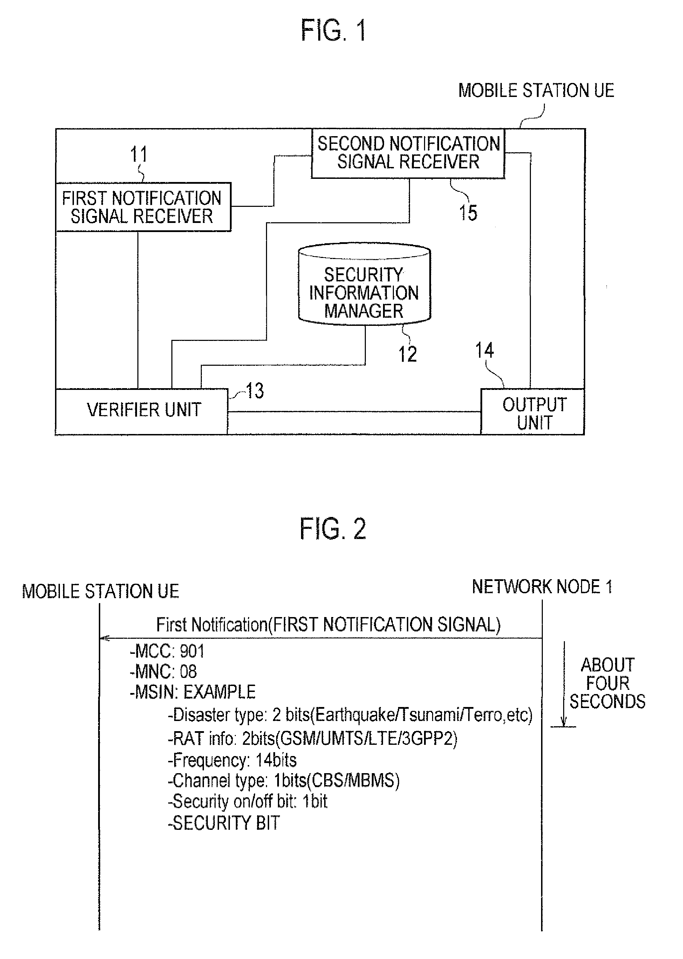

A description is given of a configuration of a mobile communication system according to a first embodiment of the present invention with reference to Fig. 1 to Fig. 4.

The mobile communication system according to the first embodiment of the present invention has the same configuration as that of the ETWS shown in Fig. 7, and the network node 1 is configured to transmit a notification signal (for example, emergency information) to the multiple mobile stations UE.

Note that the present invention is applicable to a mobile communication system employing any scheme, such as an LTE (Long Term Evolution) mobile communication system, a W-CDMA (Wideband-Code Division Multiple Access) mobile communication system, a 3GPP2 mobile communication system, a UMTS (Universal Mobile Telecommunications System) mobile communication system or a GSM (Global System for Mobile Communications) mobile communication system.

For example, when the present invention is used for the LTE mobile communication system, the network node 1 is a radio base station eNB. When the present invention is used for the W-CDMA mobile communication system, the network node 1 is a radio control station RNC.

As shown in Fig. 1, the mobile station UE according to this embodiment includes a first notification signal receiver 11, a security information manager 12, a verifier 13, an output unit 14 and a second notification signal receiver 15.

The first notification signal receiver 11 is configured to receive a "First Notification (first notification signal)" transmitted by the network node 1.

For example, the first notification signal receiver 11 may be configured to receive the "First Notification (first notification signal) " through a paging channel (PCH), or may be configured to receive the "First Notification (first notification signal)" " through broadcast information (for example, SIB10/SIB11).

As shown in Fig. 2, the "First Notification (first notification signal) includes an "IMSI (International Mobile Subscriber Identity) constituted of an "MCC (Mobile Country Code)," an "MNC (Mobile Network Code)" and an "MSIN (Mobile Subscriber Identification Number)."

Basically, the "IMSI" is an identifier for globally identifying a mobile station UE. However, the "IMSI" also plays a role as a communication identifier indicating the presence of specific communication (for example, emergency information such as earthquake information or tsunami information) to be transmitted to each of the multiple mobile stations UE.

For example, in the "IMSI" which is set in the "First Notification (first notification signal)" for indicating an emergency communication and which plays a role of the communication identifier indicating the presence of emergency information, "901" is set in the "MCC" and "08" is set in the "MNC."

In addition, the "MSIN" in the "IMSI" has, for example, a "Disaster type (two bits)," "RAT info (two bits)," a "Frequency (14 bits)," a "Channel Type (one bit)," a "Security on/off bit (one bit)," a "security bit (second security information)," and the like which are set therein.

Specifically, the "Disaster type" indicates the type of a disaster, such as an earthquake, a tsunami or terrorism, and the "RAPT info" indicates a radio access technology (such as the GSM scheme, the UMTS scheme, the LTE scheme and the 3GPP2 scheme) used for transmitting the "Second Notification."

Meanwhile, the "Frequency" indicates the frequency used for transmitting the "Second Notification," and the "Channel Type" indicates the type of a channel (a channel for CBS or a channel for MSMS) used for transmitting the "Second Notification."

The "Security on/off bit" indicates whether or not the mobile station UE needs to perform a verification of correctness of the "First Notification (first notification signal)" (in other words, indicates whether or not the security bit (second security information) is set in the "First Notification (first notification signal").

Note that the "security bit (second security information)" included in the "First Notification (first notification signal)" is configured to be updated at predetermined timing by the network node 1.

In addition, part (for example, "security bit (second security information)") of the aforementioned information included in the "MSIN" in the "IMSI" maybe included in a "Paging Cause" indicating a reason why the "First Notification (first notification signal) " is transmitted, the "Paging Cause" being a region in the "First Notification (first notification signal)."

The security information manager 12 is configured to manage security information (first security information).

Specifically, the security information manager 12 is configured to acquire the security information (first security information) from the network node 1 at the time of location registration processing (Attach procedure) by the mobile station UE, at the time of location registration update processing (TAU: Tracking Area Update procedure) by the mobile station UE, or the like.

Note that the security information manager 12 is configured to update the security information (first security information) at predetermined timing (for example, periodically) or in response to a notification from the network node 1.

The verifier 13 is configured to perform the verification of the correctness of the "First Notification (first notification signal)" by comparing the security information (first security information) managed by the security information manager 12 with the "security bit (second security information)" included in the "First Notification (first notification signal) received by the first notification signal receiver 11.

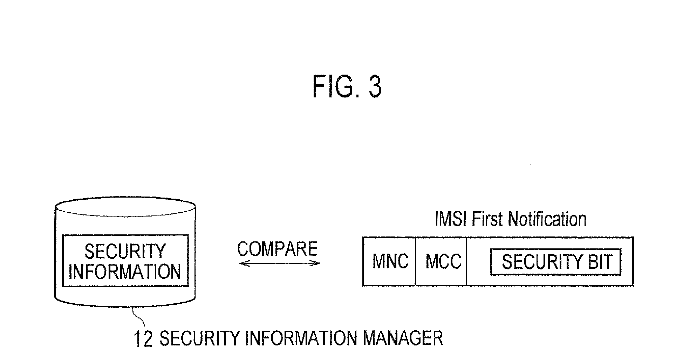

For example, as shown in Fig. 3, the verifier 13 may be configured to determine that the verification succeeds in a case where the security information (first security information) managed by the security information manager 12 matches the "security bit (second security information)" included in the "first Notification (first notification signal)."

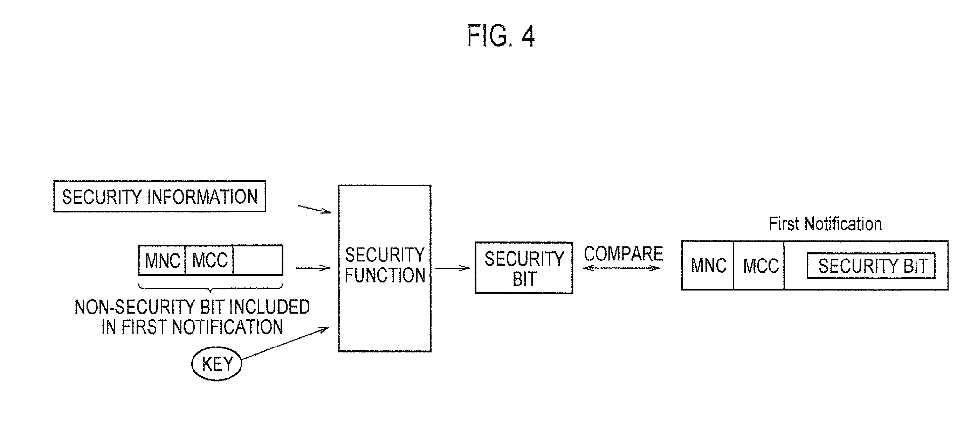

Alternatively, as shown in Fig. 4, the verifier 13 may be configured to determine that the verification succeeds in a case where a security bit obtained in the following manner matches the "security bit (second security information)" included in the "First Notification (first notification signal)." Specifically, the security bit is obtained in such a manner that the security information (first security information) managed by the security information manager 12, information (non-security bit) other than the "security bit (second security information)" included in the "First Notification (first notification signal)" and a predetermined key (for example, a fixed value previously distributed) are inputted in a predetermined security function.

Note that the verifier 13 may be configured as follows. The verifier 13 determines whether or not the mobile station UE should perform the verification of the correctness of the "First Notification (first notification signal), " defending on the "Security on/off bit (a verification necessity identifier) " included in the "First Notification (first notification signal)."

Specifically, the verifier 13 may be configured as follows. The verifier 13 determines that the mobile station UE should perform verification of the correctness of the "First Notification (first notification signal)," only in a case where the "security on/off bit (verification necessity identifier)" included in the "First Notification (first notification signal)" is "ON."

Alternatively, the verifier 13 may be configured as follows. The verifier 13 determines whether or not the mobile station UE should perform the verification of the correctness of the "First Notification (first notification signal)," depending on whether or not the security information (first security information) is managed by the security information manager 12.

Specifically, the verifier 13 may be configured as follows. The verifier 13 determines that the mobile station UE should perform verification of the correctness of the "First Notification (first notification signal), " only in a case where the security information (first security information) is managed by the security information manager 12.

The output unit 14 is configured to perform output (such as buzzer output, alarm output or displaying on a display) for the "First Notification (first notification signal) " in a case where the verification of the correctness of the "First Notification (first notification signal)" by the verifier 13 succeeds.

The output unit 14 may be configured to perform output in the following manner when a network node transmits multiple "First Notifications (notification signals)" through a single paging channel. Specifically, among the multiple "First Notifications (notification signals)," the output unit 14 performs output for a "First Notification (first notification signal)" for which the aforementioned verification succeeds.

In addition, the output unit 14 is configured to display the detailed information (the "Second Notification (second notification signal) " corresponding to the "First Notification (first notification signal)") of the emergency information received by the second notification signal receiver 15, on the display.

For example, information indicating the seismic intensity of an earthquake, a place of refuge, the time and place of food distribution, or the like is assumed as the detailed information (second notification signal). The detailed information may be small-volume text data or large-volume data.

The second notification signal notification receiver 15 is configured to receive the aforementioned detailed information (second notification signal) when the aforementioned verification succeeds, the detailed information being received based on information designated by the aforementioned "First Notification (first notification signal)." For example, the second notification signal receiver 15 may be configured as follows. When the aforementioned verification succeeds, the second notification signal receiver 15 receives the aforementioned detailed information (second notification signal) through a channel identified by the "Channel Type," the "Frequency" or the like which is included in the aforementioned "First Notification (paging signal)."

Alternatively, the second notification information receiver 15 may be configured as follows. When the aforementioned verification succeeds, the second notification information receiver 15 receives the aforementioned detailed information (second notification signal) by using a radio access technology (for example, the LTE scheme) identified by the "RAT info (radio access technology identifier)" included in the aforementioned "First Notification (first notification signal)."

Stilt alternatively, the second notification information receiver 15 may be configured to receive, when the aforementioned verification succeeds, the aforementioned detailed information (second notification signal) received simultaneously with the aforementioned "First Notification (first notification signal)."

### (Operations of Mobile Communication System According to First Embodiment of the Present Invention)

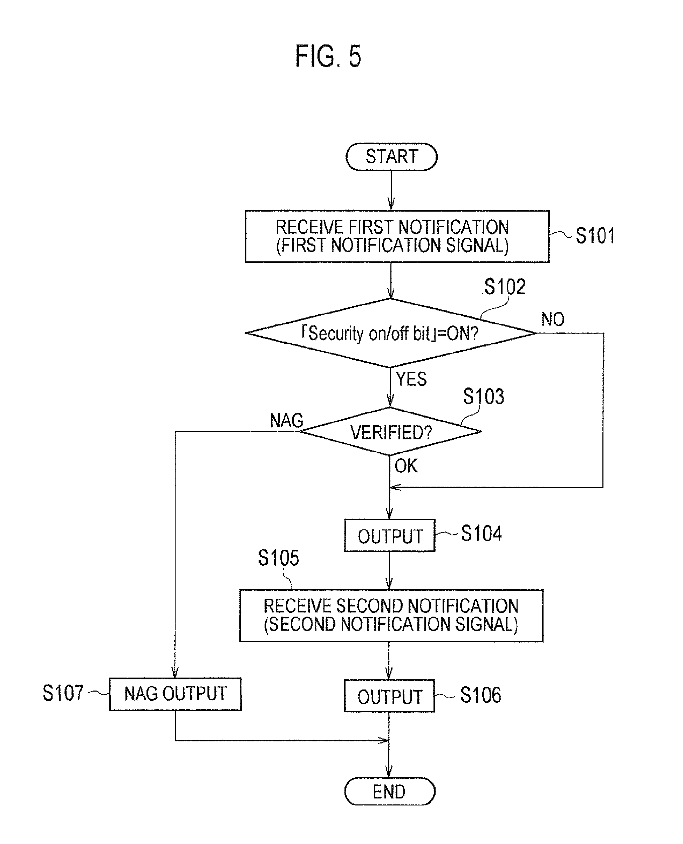

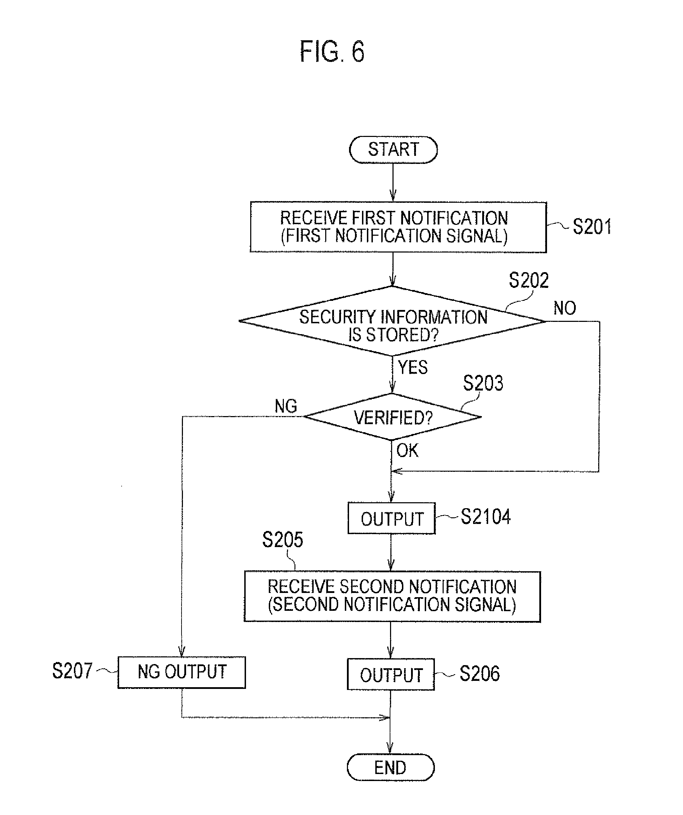

Descriptions are given of operations of the mobile station UE in the mobile communication system according to the first embodiment of the present invention with reference to Fig. 5 and Fig. 6.

In the first operation, the mobile station UE receives a "First Notification (first notification signal)" from the network node 1 in Step S101 as shown in Fig. 5.

For example, in the LTE mobile communication system, when "rue" is set in an "ETWS Indication" in a paging signal received through a PCH, the mobile station UE may receive the "First Notification (first notification signal)" included as "ETWS Information" in the broad cast information (SIB10/SIB11).

Meanwhile, in the WCDMA mobile communication system, the mobile station UE may receive the "First Notification (first notification signal)" included in a paging signal, through a PCH.

In Step S102, the mobile station UE determines whether or not the "Security on/off bit (verification necessity identifier) " included in the received "First Notification (first notification signal)" is "ON."

Here, the mobile station UE may determine whether the security information is present or absent in the "First Notification (first notification signal)" in the received broadcast information (SIB10/SIB11).

When the "Security on/off bit" is "ON (or the security information is present)," the operation proceeds to Step S103. When "Security on/off bit" is "OFF (or the security information is absent)," the operation proceeds to Step S104.

In Step S103, the mobile station UE performs the verification of the correctness of the "First Notification (first notification signal) " by the mobile station UE itself by using: the "security bit (second security information)" included in the "First Notification (first notification signal and paging signal) "; and the "security information (first security information) " managed by the mobile station UE itself.

When the verification succeeds, the operation proceeds to Step S104. When the verification fails, the operation proceeds to Step S107.

In Step S104, the mobile station UE performs output (for example, displaying an emergency information news flash or the like on the display) for the "First Notification (first notification signal)."

The mobile station UE receives a "Second Notification (second notification signal)" corresponding to the "First Notification (first notification signal)" in Step S105, and displays detailed information notified by the "Second Notification (second notification signal)" on the display in Step S106.

In Step S107, the mobile station UE performs output indicating that the verification in Step S103 has failed.

Meanwhile, in the second operation, the mobile station UE determines whether or not the "security information (first security information) " is managed, in Step S202 as shown in Fig. 6. When it is determined that the "security information (first security information) is managed, the operation proceeds to Step S203. When it is determined that the "security information (first security information)" is not managed, the operation proceeds to Step S204.

Operations in the other steps are the same as the operations in the steps in the aforementioned first operation.

### (Operations and Effects of Mobile Communication System According to First Embodiment of the Present Invention)

In the mobile communication system according to the first embodiment of the present invention, the mobile station UE is configured to perform the verification of the correctness of the "First Notification (first notification signal)" on the basis of the "security bit (second security information)" included in the "First Notification (first notification signal)" and the "security information (first security information)" managed by the mobile station UE itself. Accordingly, transmission of the first notification signal by secure communication can be achieved.

In addition, in the mobile communication system according to the first embodiment of the present invention, since the "security bit (second security information) " is transmitted in the "First Notification (first notification signal)," the mobile station UE can promptly output emergency information after the emergency information occurs.

Specifically, in the mobile communication system according to the first embodiment of the present invention, the mobile station UE can output the emergency information about four seconds after the "First Notification (first notification signal)" is transmitted, as shown in Fig. 2.

Note that operation of the above described mobile station UE and of the network node 1 may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASPIC. The ASIC may be provided in the mobile station UE and the radio base station eNB. Also, the storage medium and the processor may be provided in the mobile station UE and the radio base station eNB as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

All content of the Japanese patent application 2008-040735 (Filing date is 22 Feb 2008) are described into this application by the reference.

### INDUSTRIAL APPLICABILITY

As described above, according to the present invention, it is possible to provide a notification signal transmission method capable of transmitting a notification signal to multiple mobile stations by secure communication and to provide a mobile station for the same.

INDUSTRIAL APPLICABILITY

## Claims

1. A notification signal transmission method by which a network node transmits a notification signal to a plurality of mobile stations, the method comprising the steps of:
verifying correctness of a received first notification signal at each of the plurality of mobile stations by comparing first security information managed by the each of the plurality of the mobile stations itself with second security information included in the first notification signal; and
performing outputting for the first notification signal from each of the plurality of mobile stations when the verification of the correctness of the first notification signal succeeds at the each of the plurality of the mobile stations.

2. The notification signal transmission method according to claim 1, wherein
the first notification signal includes a radio access technology identifier which identifies a radio access technology, and
each of the plurality of mobile stations receives a second notification signal corresponding to the first notification signal by using a radio access technology identified by the radio access technology identifier included in the first notification signal.

3. The notification signal transmission method according to claim 1, wherein each of the plurality of mobile stations determines whether or not to perform the verification, depending on a verification necessity identifier indicating a necessity of the verification.

4. The notification signal transmission method according to claim 1, wherein each of the plurality of mobile stations determines whether or not to perform the verification, depending on whether or not the first security information is managed.

5. The notification signal transmission method according to claim 1, wherein
the network node transmits a plurality of first notification signals through a single paging channel, and
among the plurality of first notification signals, each mobile station performs output for a first notification signal for which the verification succeeds.

6. The notification signal transmission method according to claim 1, wherein the second security information included in the first notification signal is updated at predetermined timing by the network node.

7. The notification signal transmission method according to claim 1, wherein the first security information managed by each of the mobile stations is updated at predetermined timing or in response to a notification of the network node.

8. The notification signal transmission method according to claim 1, wherein when the first notification signal includes a communication identifier which indicates a presence of a specific communication to be transmitted to each of the mobile stations, the second security information is included in the communication identifier.

9. The notification signal transmission method according to claim 1, wherein the second security information is included in a region in the first notification signal, the region indicating a reason why the first notification signal is transmitted.

10. A mobile station used in a mobile communication system in which a network node transmits a notification signal to a plurality of mobile stations, the mobile station comprising:
a verifier configured to perform verification of correctness of a received first notification signal by comparing first security information managed by the mobile station itself with second security information included in the first notification signal; and
an output unit configured to perform output for the first notification signal when the verification of the correctness of the first notification signal succeeds.

11. The mobile station according to claim 10, wherein
the first notification signal includes a radio access technology identifier which identifies a radio access technology,
the mobile station comprising a receiver configured to receive a second notification signal corresponding to the first notification signal by using a radio access technology identified by the radio access technology identifier included in the first notification signal.

12. The mobile station according to claim 10, wherein the verifier determines whether or not to perform the verification, depending on a verification necessity identifier indicating a necessity of the verification.

13. The mobile station according to claim 10, wherein the verifier determines whether or not to perform the verification, depending on whether or not the first security information is managed.

14. The mobile station according to claim 10, wherein when the network node transmits a plurality of first notification signals through a paging channel, the output unit performs output for a first notification signal for which the verification succeeds, among the plurality of first notification signals.

15. The mobile station according to claim 10, wherein the first security information is updated at predetermined timing or in response to a (notification from the network node.
